# EUROPÄISCHE PATENTSCHRIFT

(11) **EP 1 164 893 B1**
(45) Veröffentlichungstag und Bekanntmachung des Hinweises auf die Patenterteilung: **21.01.2004**
(21) Anmeldenummer: 00925060.6
(22) Anmeldetag: 29.03.2000
(51) Int. Cl.: A47B 88/00, F16B 12/38, H05K 5/04, F16B 5/07

(54) **MECHANISCHE VERBINDUNG ZWISCHEN SEITENWÄNDEN UND RÜCKWAND EINES BLECHGEHÄUSES**
MECHANICAL LINK BETWEEN THE SIDE WALLS AND REAR WALL OF A SHEET CASING
LIAISON MECANIQUE ENTRE LES PAROIS LATERALES ET LA FACE ARRIERE D'UN BOITIER EN TOLE

(30) Priorität: 30.03.1999 DE 29905811 U
(43) Veröffentlichungstag der Anmeldung: 02.01.2002
(73) Patentinhaber: SIEMENS AKTIENGESELLSCHAFT, 80333 München (DE)
(72) Erfinder: NIGGL, Heinz-Jürgen, D-82343 Pöcking (DE)
(74) Vertreter: Berg, Peter, Dipl.-Ing.
(86) Internationale Anmeldenummer: PCT/DE2000/000955
(87) Internationale Veröffentlichungsnummer: WO 2000/059341

(56) Entgegenhaltungen:
- CH-A- 658 171
- DE-C- 482 690
- FR-A- 2 419 651
- US-A- 5 783 771

## Beschreibung

Die vorliegende Erfindung bezieht sich auf ein Gehäuseteil mit einer mechanischen Verbindung zwischen Seitenwänden und Rückwand das aus einem gemeinsamen Blechteil gebildet ist.

Die mechanische Verbindung der Seitenwände eines Blechgehäuses mit der Rückwand erfolgt in der Regel durch zusätzliche Maßnahmen, wie z.B. Schweißen, Nieten, Schrauben, Kleben usw. bzw. durch zusätzliche Handgriffe, wie z.B. Lappen verbiegen usw.

Aus CH-A-658 171 ist eine Schublade aus Metallblech mit einem Bodenteil, zwei Seitenwänden und einer Rückwand bekannt. Die Schublade ist einstückig aus einer Metallblech-Platte hergestellt. An der Rückwand sind seitlich Blechlappen ausgebildet, die mit Perforationen versehen sind. In diese Perforationen greifen Zungen ein, die an hinteren Ecken der Seitenteile ausgebildet sind. Die eigentliche mechanische Verbindung zwischen den Seitenwände und der Rückwand erfolgt aber durch Umbiegen der Blechlappen, wodurch die Seitenwände und die Rückwand zueinander fixiert werden.

Auch das aus FR-A-2 419 651 bekannte Blechgehäuse ist einteilig aus einer Blechplatte hergestellt. Die mechanische Verbindung zwischen den Seitenwänden, der Rück- und der Frontwand erfolgt durch Abkantungen an den Seitenwänden.

Ein zweiteiliges Computergehäuse ist aus US 5,783,771 bekannt. Es besteht aus einem Gehäuseunterteil mit einer Vorderwand, zwei Seitenwänden und einer Rückwand an der eine in den Innenraum weisende Abkantung ausgebildet ist. Die Abkantung greift im zusammengefügten Zustand in einen Spalt eines aufschiebbaren Gehäuseoberteils.

Aus DE-C-482 690 ist eine Verbindung zwischen zwei Blechen bekannt, bei der das eine Blech mit Schlitzen und das andere Blech mit Zacken ausgebildet ist. Der Verband zwischen den beiden Blechen wird ohne zusätzliche Maßnahmen durch Verriegeln hergestellt.

Aufgabe der vorliegenden Erfindung ist es, ein Gehäuseteil der eingangs genannten Art anzugeben, bei dem die mechanische Verbindung zwischen Seitenwänden und Rückwand ohne zusätzliche Maßnahmen hergestellt werden kann.

Diese Aufgabe wird für ein Gehäuseteil der oben genannten Art dadurch gelöst, dass die Seitenwände im Bereich der oberen hinteren Ecke Einschnitte aufweisen und die Rückwand eine Abkantung aufweist, welche an ihren Seiten hakenförmige Ansätze besitzt, die beim Abkanten der eigentlichen Rückwand in die Einschnitte der Seitenwände einschnappen.

Bei dem erfindungsgemäßen Gehäuseteil ist der Zuschnitt des Blechteils, welches unter anderem die Seitenwände und die Rückwand bildet, derartig gestaltet, dass beim Biegevorgang unmittelbar nach dem Abkanten der Rückwand diese zwangsläufig mit den Seitenwänden verschnappt und somit die mechanische Verbindung der Seitenwände mit der Rückwand hergestellt wird. Die eingangs genannten zusätzlichen Maßnahmen entfallen daher.

Weitere vorteilhafte Ausgestaltungen des erfindungsgemäßen Gehäuseteils ergeben sich aus den Unteransprüchen sowie aus der nachfolgenden Beschreibung eines Ausführungsbeispiels des erfindungsgemäßen Gehäuseteils anhand der Zeichnung.

In dieser zeigen
Figur 1 die fertige mechanische Verbindung,
Figur 2 eine Teilansicht einer Seitenwand und der Rückwand kurz vor dem Einschnappen der Rückwand in die Seitenwände, und
die Figuren 3 bis 5 unterschiedliche Zustände im Verlauf des Einschnappvorgangs der Rückwand mit den Seitenwänden.

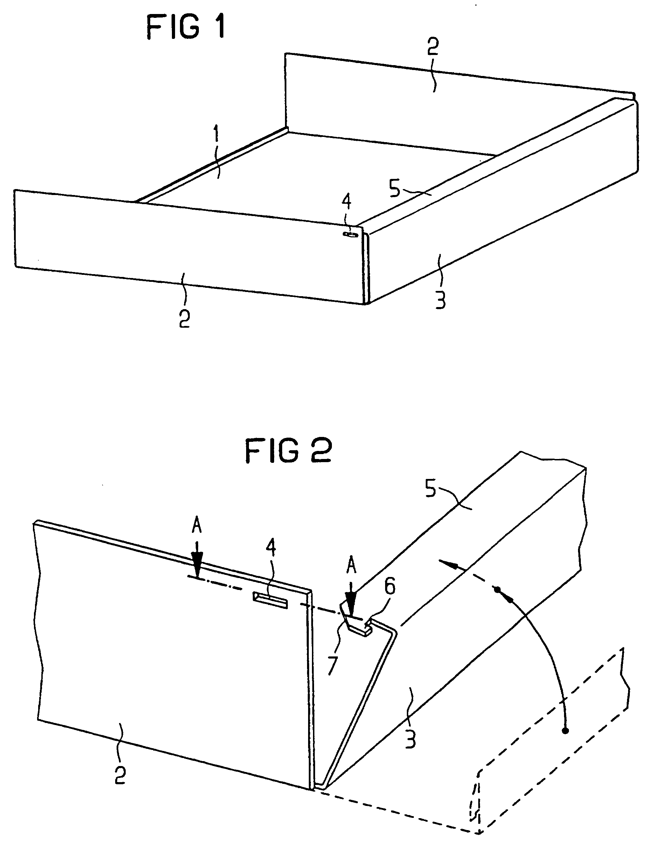

Figur 1 zeigt ein Gehäuseteil mit einer mechanischen Verbindung gemäß der vorliegenden Erfindung, welches aus dem Bodenteil 1, den Seitenwänden 2 und der Rückwand 3 besteht.

Figur 2 zeigt die Details im einzelnen. Die Seitenwände 2 weisen in der oberen hinteren Ecke einen Einschnitt 4 auf. Die eigentliche Rückwand 3 besitzt eine Abkantung 5, welche vor dem eigentlichen Abkanten der Rückwand 3 hergestellt wird. Hierbei ist vorstellbar, dass die Abkantung 5 gleichzeitig mit dem Abkanten der Seitenwände 2 erfolgen kann.

Die Abkantungen 5 der Rückwand 3 besitzen jeweils an ihren Seiten hakenförmige Ansätze 6. Diese hakenförmigen Ansätze 6 sind vorzugsweise ebenfalls Teile des gemeinsamen Blechteils und weisen in ihrem vorderen Bereich jeweils eine nach außen laufende Schräge 7 auf. Beim Abkanten der Rückwand 3 schiebt sich diese Schräge gegen die bereits abgekanteten Seitenwände 2 und drückt diese auseinander bis die hakenförmigen Ansätze 6 in die Einschnitte 4 eindringen können.

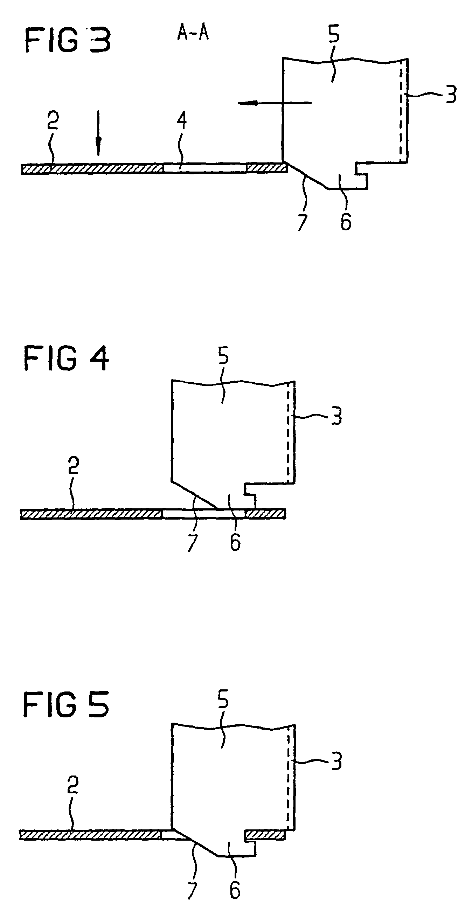

Dieser Vorgang ist in den Figuren 3 bis 5 dargestellt. Nach dem Eindringen der hakenförmigen Ansätze 6 in die Einschnitte 4 federt die Rückwand zurück, so dass die Seitenwände 2 mit der Rückwand 3 verhakt sind.

## Patentansprüche

1. Gehäuseteil mit einer mechanischen Verbindung zwischen Seitenwänden und Rückwand das aus einem gemeinsamen Blechteil gebildet ist, **dadurch gekennzeichnet, dass** die Seitenwände im Bereich der oberen hinteren Ecke Einschnitte aufweisen und dass die Rückwand eine Abkantung aufweist, welche an ihren Seiten hakenförmige Ansätze besitzt, die beim Abkanten der eigentlichen Rückwand in die Einschnitte der Seitenwände einschnappen.

2. Gehäuseteil nach Anspruch 1, **dadurch gekennzeichnet, dass** die hakenförmigen Ansätze in ihren vorderen Bereichen nach außen laufende Schrägen aufweisen.

3. Gehäuseteil nach Anspruch 1, **dadurch gekennzeichnet, dass** die hakenförmigen Ansätze einstückig mit der Abkantung ausgebildet sind.

## Claims

1. Casing part with a mechanical connection between the side walls and the rear wall, which is formed from a single sheet-metal part, **characterized in that** the side walls have cutouts in the region of the top rear corner, and **in that** the rear wall has an angled section which, on its sides, has hook-like extensions which snap into the cutouts of the side walls when the actual rear wall is swung into position.

2. Casing part according to Claim 1, **characterized in that** the hook-like extensions have outwardly running slopes in their front regions.

3. Casing part according to Claim 1, **characterized in that** the hook-like extensions are formed integrally with the angled section.

## Revendications

1. Partie de boîtier ayant une liaison mécanique entre des parois latérales et une paroi arrière qui est formée dans une pièce de tôle commune, **caractérisée en ce que** les parois latérales ont dans la région du sommet supérieur arrière des entailles, et **en ce que** la paroi arrière comporte une partie pliée qui a sur ses côtés des crochets qui, lors du pliage de la paroi arrière proprement dite, s'encliquètent dans les entailles des parois latérales.

2. Partie de boîtier suivant la revendication 1, **caractérisée en ce que** les crochets ont, dans leur région avant, des biseaux allant vers l'extérieur.

3. Partie de boîtier suivant la revendication 1, **caractérisée en ce que** les crochets sont constitués d'un seul tenant avec la partie pliée.
